# EUROPÄISCHE PATENTSCHRIFT

(11) **EP 0 904 307 B1**
(45) Veröffentlichungstag und Bekanntmachung des Hinweises auf die Patenterteilung: **28.06.2000**
(21) Anmeldenummer: 97926973.5
(22) Anmeldetag: 30.05.1997
(51) Int. Cl.: C08F 297/02, C08L 71/02

(54) **VERFAHREN ZUR HERSTELLUNG VON HYDROPHOB-HYDROPHILEN AB-BLOCKCOPOLYMEREN**
PROCESS FOR THE PREPARATION OF HYDROPHOBIC/ HYDROPHILE AB BLOCK COPOLYMERS
PROCEDE DE FABRICATION DE COPOLYMERES SEQUENCES AB HYDROPHOBES-HYDROPHILES

(30) Priorität: 05.06.1996 DE 19622614; 27.08.1996 DE 19634477
(43) Veröffentlichungstag der Anmeldung: 31.03.1999
(73) Patentinhaber: FORSCHUNGSZENTRUM JÜLICH GMBH, 52425 Jülich (DE)
(72) Erfinder: ALLGAIER, Jürgen, D-52074 Aachen (DE); WILLNER, Lutz, 52428 Jülich (DE); RICHTER, Dieter, D-52428 Jülich (DE)
(86) Internationale Anmeldenummer: DE9701118
(87) Internationale Veröffentlichungsnummer: WO9746602

(56) Entgegenhaltungen:
- WO-A-95/18164
- MACROMOLECULES, Bd. 27, Nr. 21, 1994, USA, Seiten 5957-5963, XP000537437 Y.S. YU ET AL.: "Efficiency of the sec-butyllithium/m-diisopropenylbenzene diadduct as an anionic polymerization initiator in apolar solvents"
- EUR. POLYMER JOURNAL, Bd. 27, Nr. 11, 1991, GB, Seiten 1297-1302, XP002040803 C. LE DEORE ET AL.: "Synthesis of poly(ethylene oxide-diene.ethylene oxide) triblock copolymers. characterization and use as solid polymer electrolytes"

## Beschreibung

Die Erfindung betrifft ein Verfahren zur Herstellung von hydrophob-hydrophilen AB-Blockcopolymeren nach Anspruch 1 sowie das nach dem Herstellungsverfahren synthetisierte AB-Blockcopolymer und aus dem AB-Blockcopolymer hergestellte mycellare Strukturen.

Nach dem Stand der Technik sind bereits AB-Blockpolymere bei denen der Block A Monomereinheiten enthält, die konjugierte Diene, wie 1,3-Diene sind, und der Block B Monomereinheiten b enthält, die Epoxide sind, bekannt. Solche Polymere bilden aufgrund der Inkompabilität der Blöcke A und B als Feststoff mikrophasenseparierte Systeme und in den meisten Lösungsmitteln mycellare Strukturen(= entgegengesetztes Löslichkeitsverhalten der Blöcke A und B in polaren und unpolaren Lösungsmitteln).

So wird durch die Veröffentlichung von M. Gervais, B. Gallot in Makromol. Chem **178**, 1577, (1977) und das niederländische Patent Nr.7.308.061 eine Synthese von Blockcopolymeren der Struktur AB beziehungsweise ABA beschrieben, bei denen A Polybutadien oder Polyisopren und B Polyethylenoxyd ist. Die Synthese erfolgt dabei in einer Eintopfreaktion durch sukzessive Zugabe des Dienmonomeren und des Ethylenoxides zu mono- oder bifunktionellen Organonatrium- oder Organokaliuminitiatoren in Tetrahydrofuran (THF) als polarem Lösungsmittel.
Das deutsche Patent Nr. 23 22 079 beschreibt die Synthese eines AB-Blockcopolymeren, wobei A Polybutadien und B Polyethylenoxid ist. Auch hier erfolgt die Synthese in einer Eintopfreaktion durch sukzessive Zugabe der Monomere Butadien und Epoxid zum Initiator sec. Butyllithium in Benzol. Da dieser Initiator Ethylenoxid nicht zu polymerisieren vermag, wird nach der Zugabe des Epoxids Kalium-tert.-butanolat zugegeben. Dadurch werden 20% des Epoxids polymerisiert. Mit Hilfe eins Nickelkatalysators werden anschließend 95% der olefinischen Doppelbindungen hydriert.
Die WO-A-95 18 164 beschreibt die Herstellung von BAB Blockpolymeren in einem Gemisch aus einem unpolaren und einem polaren Lösungsmittel. Die Veröffentlichung MACROMOLECULES Bd. 27, Nr. 21, 1994, USA, Seiten 5957-5963 zeigt die Wirksamkeit eines Lithium-Initiators am Beispiel der anionischen Polymerisation von Styrol-Butadien-Styrol Blockcopolymer in diesem unpolaren Lösungsmittel.
In EUR. POLYMER JOURNAL, Bd. 27 Nr. 11, 1991 GB, Seiten 1297-1302 wird die Herstellung von Triblockpolymeren vom Typ Ethylenoxid-Dien-Ethylenoxid durch anionische Polymerisation in dem polaren Lösungsmittel THF beschrieben. MACROMOLECULES Vol. 27, Nr. 21, 1994, USA, Seiten 5957-5963 zeigt die Aktivität eines Li-Initiators am Beispiel der anionischen Polymerisation eines Styrol-Butadien-Styrol Blockes in THF.
Das US-Patent Nr. 4.254.238 beschreibt die Synthese von Pfropfpolymeren. Ausgangspolymere sind hierbei Polydiene, die nach bekannten Verfahren hergestellt werden. Durch Reaktion der Polydiene mit Diaminen und Organolitiumverbindungen werden polymerisationsaktive Zentren auf dem Ausgangspolymer geschaffen. Die Zugabe von Epoxid und anschließendes Ansäuern führt zur Bildung funktioneller OH-Gruppen am Polymerrückgrat. Durch Umsatz mit Kaliumorganischen Reagenzien werden OH-Gruppen deprotoniert und durch Zugabe von Ethylenoxid Polyethylenoxidblöcke aufpolymerisiert.
Die von M.Gervais, B.Gallot in Makromol. Chem. 178,1577, (1977) und in dem niederländischen Patent mit der Nummer 7.308.061 beschriebenen Synthesen zeigen eine sehr hohe Reaktivität der Agenzien, mit dem Ergebnis, daß es während der Reaktion zu Kettenabbrüchen oder zur Ausbildung von Seitenketten kommt. Das Ergebnis ist ein uneinheitliches Reaktionsprodukt, welches Moleküle mit Molekülblöcken A und/oder B aufweist, die eine uneinheitliche Länge haben oder nicht linear, sondern verzweigt sind. Entsprechend lassen diese Synthesen keine Steuerung der Reaktion im Hinblick auf die genaue molekulare Zusammensetzung der Zielverbindung zu.

Die im deutschen Patent Nr. 23 22 079 beschriebene Synthese führt zu einem Reaktionsgemisch, welches sowohl Lithium- als auch Kaliumionen aufweist. In diesem Gemisch findet eine Aufpolymerisation des Epoxids auf das Polydien nur zu 20% statt, wodurch zum einen ein hoher Grad an nicht reagierten Edukt im Polymerisat verbleibt und eine aufwendige Nachreinigung erfolgen muß. Diese 20% enthalten jedoch noch Homopolymeranteile, also Polymeranteile, die nur aus Epoxidmonomeranteilen gebildet sind, so daß zum einen eine Verunreinigung durch das Homopolymer zu verzeichnen ist und zum anderen weniger als 20% auf den Block A aufpolymerisiert werden. Es muß erheblich mehr Ausgangsstoff eingesetzt werden, als tatsächlich zum erwünschten Produkt umgesetzt wird, so daß dieses Verfahren zu seinem hohen Aufarbeitungsaufwand auch noch hohe Kosten verursacht. Zusätzlich kommen Entsorgungsprobleme zum Tragen.

Die in der US-4.254.238 beschriebene Reaktion läuft unter sehr aggressiven Bedingungen ab und verläuft daher ebenfalls sehr unkontrolliert. So werden zum Beispiel Ketten gespalten. Zusätzlich verbleibt in der Lösung lithiiertes Tetramethylethylendiamin (TMEDA) und unreagiertes Butyllithium. Unter den Reaktionsprodukten befindet sich auch ein Anteil von Homopolyethylenoxid, also ein Polymerisat, welches lediglich aus Epoxid-Einheiten gebildet ist. Wie jedoch die Veröffentlichung "Synthesis and properties of uniform polyisoprene networks. I. synethsis and characterization of α,ω-dihydroxypolyisoprene" aus der Zeitschrift Rubber chemistry and technology Vol.49, S.303 (1976) zeigt, fallen die Reaktionsintermediäre, die nur zwei -CH₂-CH₂-O--Seitenketten aufweisen, unter Bildung von Komplexen mit den Metallionen aus der Lösung aus. Das Ergebnis ist ein uneinheitliches Produkt, welches einen hohen Anteil an unreagierten Komponenten und Nebenprodukten enthält.

Keines der angegebenen Verfahren ist dazu in der Lage, ein AB-Blockcopolymer bereitzustellen, welches in seiner chemischem Beschaffenheit bezüglich der Linearität und Kettenlänge klar definiert und frei von Nebenprodukten ist. Die Blöcke A, die sich aus dem monomeren Dien zusammensetzen, weisen in dem Niederländischen Patent Nr. 7.308.061 eine Mischstruktur aus 1-4- und 1-2-bzw.3-4-Polymerisat auf.

Der Erfindung liegt daher die Aufgabe zugrunde, ein Verfahren zur Herstellung von AB-Blockcopolymeren mit den Monomereinheiten a = konjugiertes Dien und den Monomereinheiten b = Epoxid zu schaffen, das sowohl zu einem strukturell klar definierten Produkt führt, bei dem die Kettenlängen der Blöcke A und B frei wählbar und durch die Reaktionsbedingungen einstellbar sind, bei dem keine Verzweigung des Produkts in Form von Seitenketten erfolgt und bei dem keine Nebenprodukte, wie Homopolymere A oder B, gebildet werden. Außerdem sollen die Blöcke A einen sehr hohen Anteil an 1,4-Polymerisat aufweisen. Der Aufwand für Nachreinigung soll so gering wie möglich gehalten werden. Das Verfahren soll kostengünstig sein.
Es soll ein Polymerisat zur Verfügung gestellt werden, das eine niedrige Glasübergangstemteratur des Blockes A hat und es soll ein AB-Blockcopolymer geschaffen werden, welches in Lösungsmitteln mycellare Strukturen bilden kann.

Ausgehend vom Oberbegriff des Anspruchs 1 wird die Aufgabe erfindungsgemäß gelöst, mit den im kennzeichnenden Teil des Anspruchs 1 angegebenen Merkmalen.

Mit dem erfindungsgemäßen Verfahren ist es nunmehr möglich, ein AB-Blockcopolymer zur Verfügung zu stellen, das in den Kettenlängen der Blöcke A und B sowie in deren Längen zueinander klar definiert ist. Das Produkt weist keine Verzweigung durch Seitenketten auf. Es lassen sich nunmehr je nach Wunsch Moleküle maßschneidern, die den jeweiligen Erfordernissen an Kettenlänge Molekulargewicht, Polaritätsanteil oder Viskosität gerecht werden. Der Umsatz der Ausgangsstoffe ist quantitativ und es läßt sich ein Produkt herstellen, dessen Block A einen ca.95%-igen Anteil an 1,4-Additionsprodukt aufweist. Je nach Anforderungen ist man nicht mehr darauf angewiesen, äquivalente Mengen an Natrium- oder Kaliumorganyl für die Polymerisation des Epoxides, entsprechend den OH-Gruppen, die durch Zugabe einer Einheit Epoxid in den Block A entstanden ist, zuzugeben. Trotzdem erhält man ein homogenes Wachstum.

Vorteilhafte Weiterbildungen der Erfindung sind in den Unteransprüchen angegeben.

Im Folgenden soll das erfindungsgemäße Herstellungsverfahren für AB-Blockcopolymere beschrieben werden.

Die Zeichnungen veranschaulichen beispielhaft die aus den AB-Blockcopolymeren hergestellten mycellaren Strukturen.

Es zeigt:
- Fig.1:: eine sphärische mycellare Struktur des AB-Blockcopolymers in einem Lösungsmittel (auch elypsoid möglich)
- Fig.2:: eine zylinderförmige mycellare Struktur des AB-Blockcopolymers in einem Lösungsmittel
- Fig.3:: eine lamellare mycellare Struktur des AB-Blockcopolymers in einem Lösungsmittel

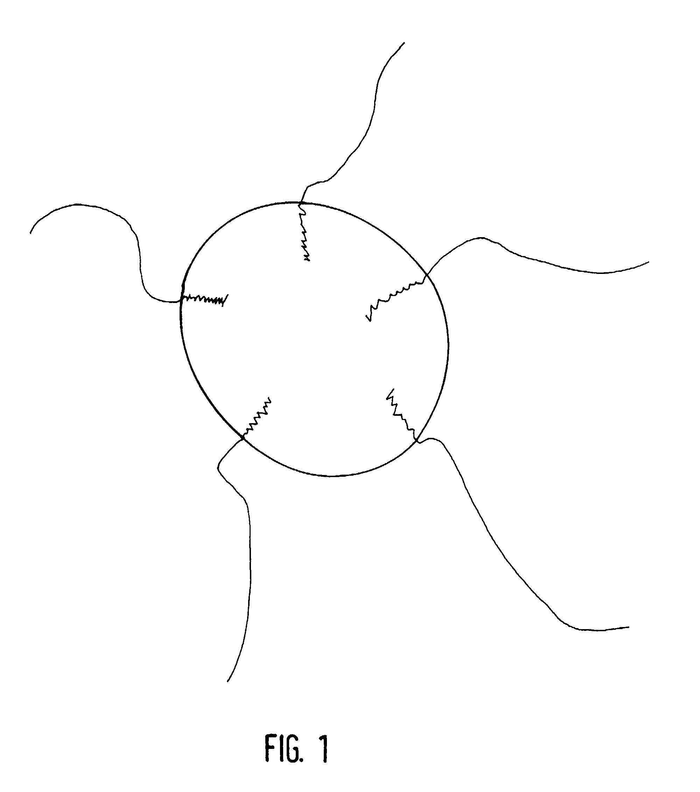

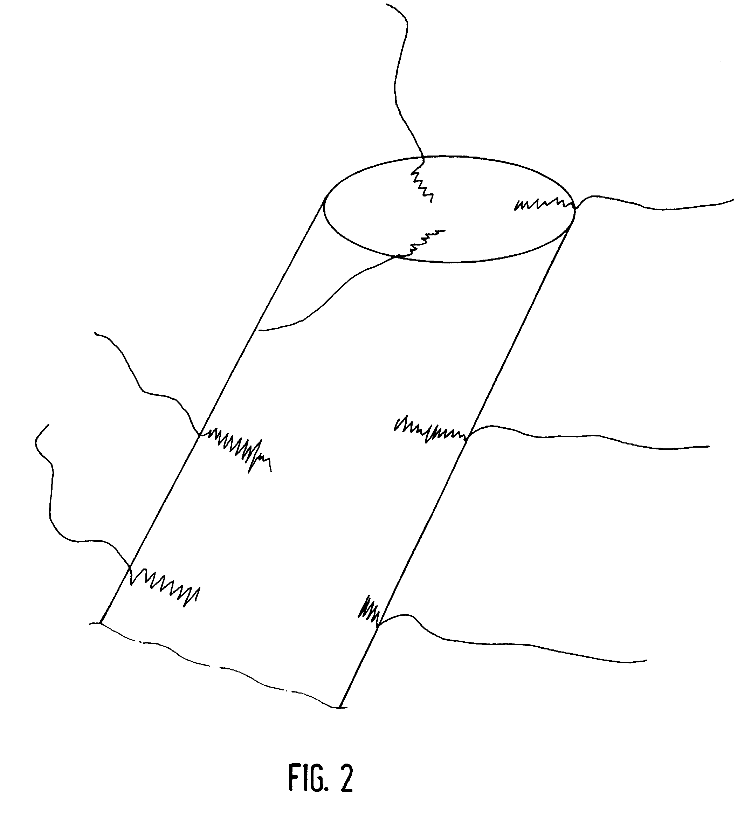

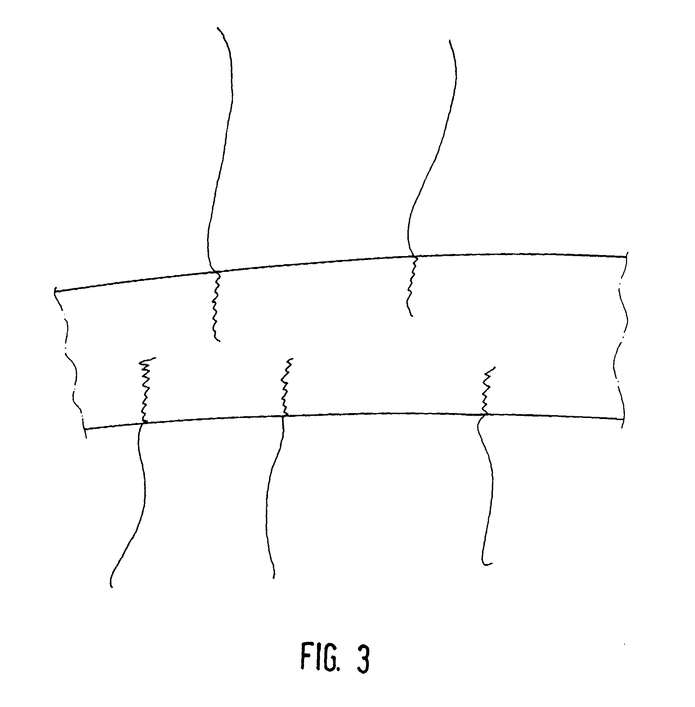

Alle in den Figuren 1 bis 3 gezeigten Strukturen sind sowohl in unpolaren Lösungsmitteln (hier wird der Block A gelöst) als auch in polaren Lösungsmitteln (hier wird der Block B gelöst) möglich.

Tabelle 1 zeigt die in den Beispielen angegebenen Versuchsergebnisse.

In ihr sind:
PI = OH-endfunktionalisiertes Polyisopren
PEP = OH-endfunktionalisiertes Poly(ethylenpropylen)
PEO = Polyethylenoxidblock im Copolymer
^{a} mittels GPC bestimmt
^{b} aus Mₙ PEP und der Zusammensetzung mittels NMR be stimmt
Mₙ = Zahlenmittleres Molekulargewicht
M_{w} = Gewichtsmittleres Molekulargewicht
GPC = Gelpermeationschromatographie

Die Herstellung der erfindungsgemäßen AB-Blockcopolymere erfolgt in einer zweistufigen Synthese, bei der im ersten Schritt ein konjugiertes Dien in einem unpolaren Lösungsmittel unter Verwendung eines Initiators mit bekannten Methoden anionisch polymerisiert wird. Als Initiator wird ein Lithiumorganyl eingesetzt. Unter einem AB-Blockcopolymer im Sinne der Erfindung ist ein Polymer mit mindestens einem Block A und mindestens einem weiteren Block B zu verstehen. Neben der Struktur AB ist auch die Struktur BAB erfindungsgemäß. Der Block A setzt sich dabei aus einer Monomereinheit a oder aus einem Gemisch der Monomereneinheiten a,a',a'' usw. zusammen. In Analogie enthält der Block B Monomereinheiten b oder ein Gemisch b, b', b'' usw. Die Monomere a sind im allgemeinen konjugierte Diene jedoch insbesondere 1,3 Diene. Bevorzugt sind 1,3-Diene, die lediglich kurze Seitenketten tragen, jedoch können je nach gewünschtem Produkt auch Diene eingesetzt werden, die entweder längere Seitenketten haben oder in denen die Dienstruktur nicht terminal sondern in einer Kette angeordnet ist. Weiterhin können auch isolierte Doppelbindungen in das Molekül eingebaut sein. Beispielhaft können folgende Verbindungen genannt werden. 1,3 Butadien, Isopren, 2,3 Dimethylbutadien, 1,3Pentadien, 1,3 Dimethylbutadien, 2,4 Hexadien: Anstelle der Methylgruppen können auch Phenylgruppen oder deren Alkylderivate stehen. Entscheidend für die Auswahl der Monomere a ist, daß sie einen unpolaren Polymerblock A bilden.

Das Monomer b des Blockes B ist ein Epoxid. In der einfachsten Ausführungsform kann das Epoxid Ethylenoxid sein, jedoch können auch mit Substituenten versehene Epoxide zur Synthese herangezogen werden. Die Substituenten können Alkyl-oder Arylsubstituenten sein. Entscheidend für die Auswahl der Monomere b ist, daß sie einen Polymerblock B bilden, der wasserlöslich ist. Es können somit auch andere Monomere herangezogen werden, die dieses Resultat gewährleisten.
Für die Monomeren a,a',a'' und b,b',b'' usw. ist die Erfindung jedoch nicht auf die angegebenen Beispiele beschränkt.
Als Initiatoren für die anionische Polymerisation des Blockes A werden Lithiumorganyle, wie sec. Buthyllithium oder tert.-Butyllithium eingesetzt. Dabei findet das Lithium-Ion als Gegenion aus Gründen der Löslichkeit des Organyls bevorzugte Anwendung. Jedoch ist entscheidend, daß das Organylanion in dem unpolaren Lösungsmittel, welches in dem ersten Reaktionsschritt eingesetzt wird, eine Löslichkeit des reaktiven Agens in dem Lösungsmittel ermöglicht. Der Einsatz von bifunktionellen Lithiumorganylen, wie einem 2:1 Addukt aus sec Butyllithium und 1,3-bis (1-phenylethenyl)benzol (MDDPE), führt im weiteren Reaktionsverlauf zu AB-Blockcopolymeren der Struktur BAB. Die Steuerung des Reaktionsverlaufes hinsichtlich der Linearität der Produkte ergibt sich aus der Unpolarität des Lösungsmittels.
Als unpolares Lösungsmittel im Sinne der Erfindung ist ein unpolarer aromatischer oder aliphatischer Kohlenwasserstoff zu verstehen.
Beispielhaft kann hier Benzol, c-Hexan,iso-Pentan, also verzweigte Alkane, und Alkan genannt werden.
Nachdem das Monomer a in dem unpolaren Lösungsmittel mittels des Organylanions zu einem Block A polymerisiert wurde, wird am Ende zu den noch aktiven Kettenenden eine Monomereinheit b aufpolymerisiert. Weiterpolymerisation findet aufgrund der Verwendung von Lithiuminitiatoren nicht statt. Nach Beenden der Reaktion mittels Säure wird das mit alkoholischen OH-Gruppen funktionalisierte Polymer A(OH) erhalten. Anschließend kann A-OH unter Verwendung gängiger Methoden zum Polyolefin A(H)-OH hydriert werden. Die endständigen OH-Gruppen werden dadurch nicht angegriffen.

Um Lithiumsalze aus dem Polymer A-OH bzw. A(H)-OH abzutrennen, kann A-OH oder A(H)-OH ausgefällt werden. Dies hat den Vorteil, daß Li⁺ -Ionen die Folgereaktion nicht stören.
Nachdem das Zwischenprodukt A(H)-OH oder A-OH ausgefallen ist, kann es isoliert und erhitzt werden, um Verunreinigungen zu entfernen. Die für die Weiterverarbeitung störenden protischen Verunreinigungen, wie Wasser, Alkohole und Säure, werden durch mehrmaliges Auflösen der Polymere A-OH bzw. A(H)-OH in Benzol und anschließendem Abdestillieren bzw. Verdampfen des Benzols unter Vakuumbedingungen erreicht. Anstelle des Benzols kann auch ein anderes Lösungsmittel, wie THF oder Toluol treten. Das Lösungsmittel soll dabei die Polymere A-OH bzw. A(H)-OH lösen und flüchtige protische Verunreinigungen entfernen. Das Polyolefin A(H)-OH kann aufgrund dessen hoher thermischer Stabilität zwischen den einzelnen Destillationscyclen unter Vakuumbedingungen auf 100 bis 120°C erhitzt werden, was die Effektivität des Reinigungsprozesses erhöht. Je nach Produkteigenschaft kann auch auf höhere Temperaturen, wie 150 bis 180°C erhitzt werden. Das Zwischenprodukt A(H)-OH kann alternativ durch anschließliches Erhitzen unter Vakuumbedingungen von den störenden Verunreinigungen befreit werden. Das mehrmalige Auflösen des Polymers im Lösungsmittel und Abdestillieren des Lösungsmittels entfällt dadurch.
Im zweiten Schritt wird A-OH bzw. A(H)-OH, ohne zwischenzeitlichen Luftkontakt zuzulassen, unter den für die anionische Polymerisation üblichen Reinheitsbedingungen in trockenem THF oder einem anderen polaren Lösungsmittel gelöst. Als weitere polare Lösungsmittel sind beispielsweise Ether wie Diethylether, oder tert. Amine geeignet. Jedoch ist die Wahl der Lösungsmittel nicht aus die hier angegebenen Beispiele beschränkt. Mittels Kalium- oder Natriumorganischer Reagenzien, wie Cumylkalium werden die entständigen OH-Gruppen der Verbindungen A(H)-OH bzw. A-OH deprotoniert und in die Makroinitiatoren A-OK, A-ONa bzw. A(H)-OK oder A(H)-ONa überführt. Jedoch werden Kaliumverbindungen bevorzugt. Durch Zugabe des Epoxids wird der Block B aufpolymerisiert und die Reaktion anschließend durch Zugabe von Säure beendet. Es können jedoch alle Metallorganyle eingesetzt werden, die die Löslichkeit des Organyls und der Reaktionsintermediäre gewährleisten und die Poymerisation des Epoxides erlauben. Beispielhaft sind hier Benzylkalium, Flurenylkalium und Naphthylkalium zu nennen. Als Initiatoren können auch Metallhydride, wie NaH oder KH oder die reinen Alkalimetalle, wie Natrium oder Kalium eingesetzt werden.
Alternativ zur Hydrierung nach dem ersten Schritt, kann die Hydrierung auch in Anschluß an die Aufpolymerisierung des Blockes B erfolgen.
Die Synthese der erfindungsgemäßen AB-Blockcopolymere kann unter Schutzgas oder im Vakuum, beispielsweise bei 10⁻⁴ mbar, durchgeführt werden.

### Beispiele:

### Beispiel 1

Polyisopren-Polyethylenoxid-Blockcopolymer: 22,00 g Isopren, welches zuvor 14 Stunden bei Raumtemperatur über lösungsmittelfreiem Dibutylmagnesium und 20 Minuten bei -10°C über lösungsmittelfreiem n-Butyllithium getrocknet wurde, werden unter Hochvakuumbedingungen in ein 500 mL Glasreaktor einkondensiert. 300 mL über n-Butyllithium getrocknetem Cyclohexan werden zukondensiert. Aus einer am Reaktor angebrachten Ampulle werden 1,00 mmol sec-Butyllithium als Lösung in Cyclohexan zugegeben. Nach 24 Stunden werden über eine weitere Ampulle 0,72 g entgastes und über Calciumhydridpulver getrocknetes Ethylenoxid zugegeben. Nach weiteren 14 Stunden wird die Polymerisation durch Zugabe von Essigsäure abgebrochen. Das OH-endfunktionalisierte Polyisopren wird durch Ausfällen in Methanol isoliert.
8,17 g des Polymers werden in 60 mL über n-Butyllithium getrocknetem Benzol gelöst. Das Lösungsmittel wird unter Hochvakuumbedingungen abdestilliert und das Polymer unter Hochvakuumbedingungen 20 Stunden gerührt. Der gesamte Vorgang wird noch zweimal wiederholt. Anschließend wird das Polymer ohne Luftkontakt zuzulassen in 60 mL über einem Gemisch aus Natrium-Kaliumlegierung und Benzophenon getrocknetem THF gelöst. Unter Hochvakuumbedingungen wird zur Polymerlösung eine 0,05 molare Lösung von Cumylkalium in THF zugegeben, bis eine leichte Orangefärbung der Polymerlösung bestehen bleibt. Zur Polymerlösung werden unter Hochvakuumbedingungen 5.89 g entgastes und über Calciumhydrid gereinigtes Ethylenoxid sowie 150 mL THF gegeben. Die Weiterpolymerisation wird drei Tage bei 50°C weitergeführt und danach durch Zugabe von Essigsäure beendet. Das Blockcopolymer wird durch Ausfällen in -20°C kaltem Aceton gereinigt.
Das AB-Blockcopolymer bildet in Wasser lösliche Mycellen in der Größenordnung von µm.

### Beispiel 2

Poly(ethylenpropylen) Polyethylenoxid Blockcopolymer: 7,2 g OH-endfunktionalisiertes Polyisopren aus Beispiel 1 werden in 600 mL Heptan gelöst und unter Zuhilfenahme eines Palladium/Bariumsulfatkatalysators bei 90°C und 40 bar Wasserstoffdruck hydriert. Das erhaltene OH-endfunktionalisierte Poly(ethylenpropylen) wird durch Fällen in Methanol gereinigt und unter Rühren drei Tage bei 100°C im Hochvakuum getrocknet. Das Aufpolymerisieren des Polyethylenoxidblocks geschieht wie in Beispiel 1 beschrieben unter Verwendung von 5,51 g OH-endfunktionalisiertem Poly(ethylenpropylen) und 2,75 g Ethylenoxid. Die Reinigung des Produkts geschieht ebenso wie in Beispiel 1 beschrieben.

### Beispiel 3

Poly(ethylenpropylen) Polyethylenoxid Blockcopolymer: Unter Verwendung von 29,08 g Isopren, 800 mL Benzol, 6,53 mmol t-Butyllithium und 2,38 g Ethylenoxid wird wie in Beispiel 1 OH-endfunktionalisiertes Polyisopren hergestellt. Die Hydrierung des Polyisoprens erfolgt nach Beispiel 2. Die Umsetzung von 1,28 g OH-endfunktionalisiertem Poly(ethylenpropylen) mit 4,04 g Ethylenoxid erfolgt ebenso wie in Beispiel 2.

Das AB-Blockcopolymer bildet Mycellen in Dekan.

### Beispiel 4

Poly(ethylenpropylen) Polyethylenoxid Blockcopolymer: 3,64 g OH-endfunktionalisiertes Poly(ethylenpropylen) werden mit 1,18 g Ethylenoxid wie in Beispiel 2 umgesetzt. Die Reinigung des Produkts geschieht durch Ausfällen in Wasser.

### Beispiel 5

Polyisopren-Polyethylenoxid-Blockcopolymer: Zu 2,14 g OH-endfunktionalisiertem Polyisopren aus Beispiel 3 werden unter den gleichen Bedingungen wie in Beispiel 1 beschrieben 50 Mol% der Menge an Cumylkalium gegeben, die für eine vollständige Deprotonierung der polymeren OH-Gruppen nötig sind. Die Anzahl der OH-Gruppen wird aus der eingesetzten Menge und dem Molekulargewicht des OH-endfunktionalisierten Polyisoprens berechnet. Die Umsetzung mit 6,75 g Ethylenoxid erfolgt wie in Beispiel 1 mit Ausnahme der Reaktionszeit, die 7 Tage beträgt.
Die Blockcopolymere aus den Beispielen 1 - 5 werden mittels GPC auf das Vorhandensein von Polyisopren-, Poly(ethylenpropylen)- und Polyethylenoxid-Homopolymeren hin untersucht. In keinem Fall können nachweisbare Mengen Homopolymer festgestellt werden (Nachweisgrenze kleiner 1%).

Die Charakterisierung der Molekulargewichte der Polymere aus Beispiel 1 - 5 ist in der Tabelle 1 zusammengefaßt.

Zum erstenmal ist es möglich, AB-Blockcopolymere, umfassend einen Polydienblock A und mindestens einen Epoxid-Block B als chemisch und molekular definierte Materialien herzustellen. Durch den Wechsel der Reaktionsbedingungen zwischen den Polymerisationsschritten 1 und 2 können beide Monomere ohne Nebenreaktionen quantitativ polymerisiert werden. Im Produkt sind daher weder polymere Nebenprodukte noch unreagiertes Monomer vorhanden. Keines der im Stand der Technik angeführten Verfahren ist dazu in der Lage, diese Blockcopolymere nebenproduktfrei herzustellen.
Durch das frei zu wählende Mengenverhältnis der Monomere a und b können über die Variation der Blockmolekulargewichte von A und B die Eigenschaften des AB-Blockcopolymers, beispielsweise bezüglich ihrer Anwendbarkeit als Detergenzien, exakt eingestellt werden. Nach den Verfahren, die bisher bekannt waren ist dies nicht möglich.
Durch die Verwendung von aliphatischen oder aromatischen Kohlenwasserstoffen als Lösungsmittel bei der Polymerisation des Dienblockes A wird dieser mit maximalem Anteil an 1,4 Mikrostruktur erhalten; d.h. die anionische Polymerisation läuft stark überwiegend, bis zu ca. 95% als 1,4-Addition ab. Dadurch wird eine tiefe Glasübergangstemperatur für Block A erreicht, was sowohl für die Verarbeitbarkeit, zum Beispiel beim Extrudieren, als auch für Anwendungen erwünscht oder sogar erforderlich ist. Die erreichten Glasübergangstemperaturen sind beim 1,3 Butadien-Polymerisat bei -80°C bei 95% 1,4-Polymerisat und im Falle des Isoprenpolymerisats -70°C bei 95% 1,4-Polymerisat im Block A Die im Stand der Technik angegebenen Verfahren, die von polaren Lösungsmitteln, wie THF (Tetrahydrofuran), Gebrauch machen, führen zu Polymeren mit höheren Glasübergangstemperaturen für Block A.
Die hydrierten AB-Blockcopolymere sind widerstandsfähiger gegenüber Oxidation und thermisch belastbarer als die nicht oder weniger hydrierten Produkte.
Dies macht sich positiv bei der Herstellung, Verarbeitung und bei der Anwendung bemerkbar. Zusätzlich weisen die hydrierten AB-Blockcopolymere, sofern als Ausgangsprodukt für den zweiten Reaktionsshritt hydriertes Polybutadien mit einem hohen Anteil von 1,4-Polymerisat verwendet wurde, einen hohen Kristallisationsgrad auf und sind in den meisten Lösungsmitteln unlöslich oder nur bei bei hohen Temperaturen (zum Beispiel in aromatischen und aliphatischen Lösungsmitteln) löslich. Die erfindungsgemäßen Produkte sind je nach relativer Kettenlänge der Blöcke A und B in Wasser oder in Alkanen löslich.

Die erfindungsgemäßen AB-Bockpolymere können für die Herstellung von Emulsionen und Mikroemulsionen eingesetzt werden. Sie weisen in aliphatischen Alkanen lösliche Blöcke A auf. Eine Ausnahme hierfür ist jedoch das hydrierte 1,3 Butadien mit hohem Anteil an 1,4-Polymerisat.
Die erfindungsgemäßen AB-Blockcopolymere bilden in Lösungsmitteln und Lösungsmittelgemischen mycellare Strukturen, die unterschiedlich ausgebildet sein können. Die kritische Mycellkonzentration (CMC)von den polymeren Amphiphilen ist kleiner als von niedermolekularen Amphiphilen. Die mycellaren Strukturen bilden als Feststoff mikrophasenseparierte Systeme.
Die in den Figuren 1 bis 3 angegebenen Beispiele stellen eine Auswahl aus möglichen mycellaren Strukturen dar und sind nicht beschränkend.

Die erfindungsgemäßen AB-Blockcopolymere und mycellaren Systeme können als Emulgatoren in der Medizin, Pharmazie und im Lebensmittelbereich Anwendung finden.

In Tabelle 1 bedeuten:
PI = OH-endfunktionalisiertes Polyisopren
PEP = OH-endfunktionalisiertes Poly(ethylenpropylen)
PEO = Polyethylenoxidblock im Copolymer
^{a} mittels GPC bestimmt
^{b} aus Mₙ PEP und der Zusammensetzung mittels NMR bestimmt

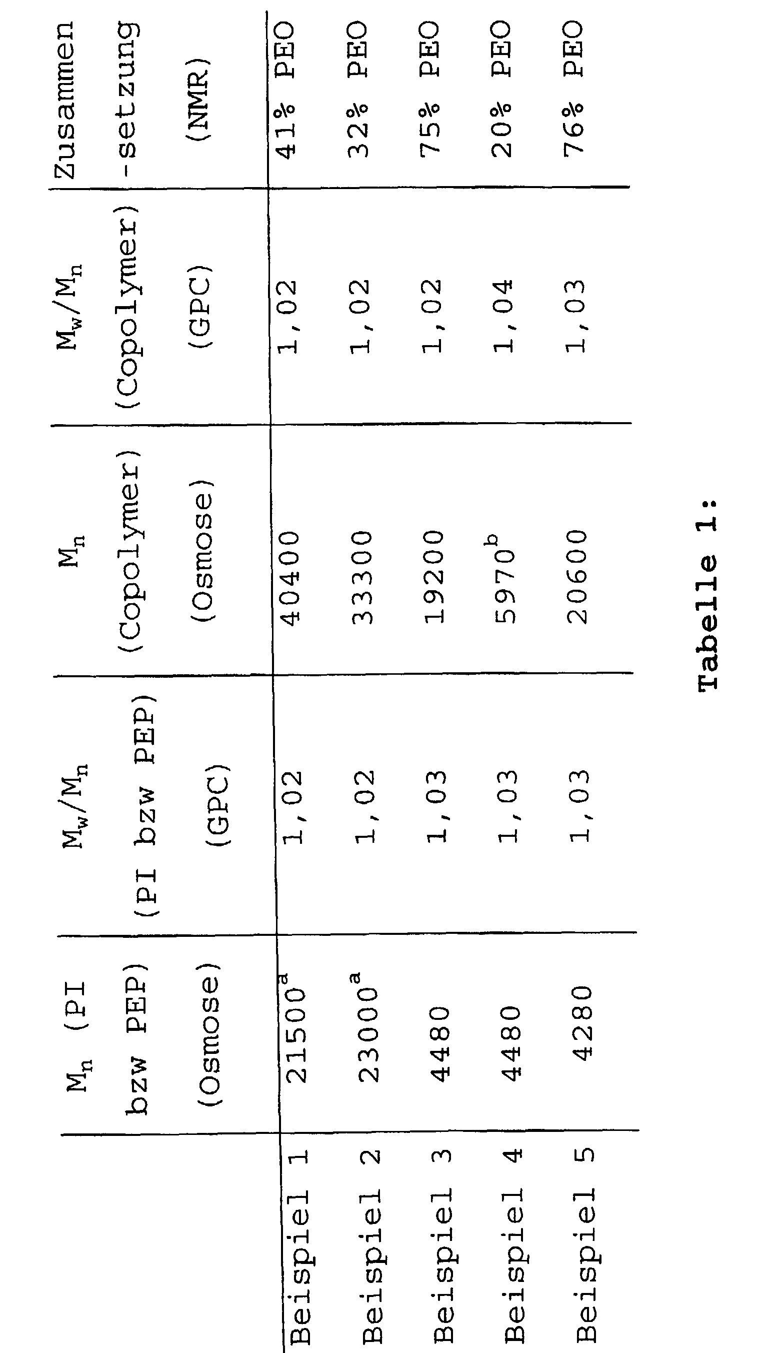

## Patentansprüche

1. Verfahren zur Herstellung von hydrophob-hydrophilen AB-Blockcopolymeren durch anionische Polymerisation dadurch gekennzeichnet, daß die Monomereinheiten a des Blockes A ein konjugiertes Dien und die Monomereinheiten b des Blockes B ein Epoxid sind, bei dem der Block A in einem ersten Reaktionsschritt in einem unpolarer. Lösungsmittel hergestellt und der Block B in einem zweiten Reaktionsschritt in einem polaren Lösungsmittel hergestellt wird, wobei zum Abschluß des ersten Reaktionsschrittes
1. das Epoxid und
2. ein Protonendonator zugegeben wird und die Polymerisation des Blockes B mittels eines Alkalimetallinitiators ausgenommen eines Lithiuminitiators erfolgt.

2. Verfahren nach Anspruch 1,
dadurch gekennzeichnet,
daß die Polymerisation des Blockes A mittels eines Lithiumorganyls als Initiator erfolgt.

3. Verfahren nach einem der Ansprüche 1 oder 2,
dadurch gekennzeichnet
daß als Alkalimetallinitiator zur Polymerisation des Blocks B ein Initiator aus der Gruppe von Alkalimetallorganyl, Alkalimetallhydrid und Alkalimetall eingesetzt wird.

4. Verfahren nach Anspruch 3,
dadurch gekennzeichnet,
daß der Litiuminitiator im ersten Reaktionsschritt: ein bifunktioneller Initiator ist.

5. Verfahren nach einem der Ansprüche 1 bis 4,
dadurch gekennzeichnet,
daß die in dem Block A auftretenden Doppelbindugnen mindestens teilweise hydriert werden.

6. Verfahren nach Anspruch 5,
dadurch gekennzeichnet,
daß die Doppelbindungen vollständig hydriert werden.

7. Verfahren nach Anspruch 5 oder 6,
dadurch gekennzeichnet,
daß die in Block A auftretenden Doppelbindungen in Anschluß an die Säurezugabe hydriert werden.

8. Verfahren nach einem der Ansprüche 1 bis 7,
dadurch gekennzeichnet,
daß der Block A nach der Zugabe des Protonendonators oder nach der Hydrierung mindestens einmal in einem Lösungsmittel aufgelöst und das Lösungsmittel abdestilliert wird.

9. Verfahren nach Anspruch 8,
dadurch gekennzeichnet,
daß das Lösungsmittel Benzol ist.

10. Verfahren nach Anspruch 8 oder 9,
dadurch gekennzeichnet,
daß die Destillation unter Vakuum durchgeführt wird.

11. Verfahren nach einem der Ansprüche 8 bis 10,
dadurch gekennzeichnet,
daß nach der Destillation bei einer Temperatur zwischen Raumtemperatur und 120°C evakuiert wird.

12. Verfahren nach einem der Ansprüche 8 bis 11,
dadurch gekennzeichnet,
daß die Destillation bei Raumtemperatur durchgeführt wird.

13. Verfahren nach einem der Ansprüche 1 bis 7,
dadurch gekennzeichnet,
das der Block A nach der Zugabe des Protonendonators oder nach der Hydrierung abgetrennt und evakuiert wird.

14. Verfahren nach Anspruch 13,
dadurch gekennzeichnet,
daß bei einer Temperatur zwischen Raumtemperatur und 120°C evakuiert wird.

15. Verfahren nach einem der Ansprüche 1 bis 14,
dadurch gekennzeichnet,
daß die Herscellung des Blockes A bei einer Temperatur erfolgt, die Raumtemperatur nicht unterschreitet.

16. Verfahren nach einem der Ansprüche 1 bis 15,
dadurch gekennzeichnet,
daß die Herstellung des Blockes B bei einer Temperatur zwischen Raumtemteratur und 50°C erfolgt.

17. Verfahren nach einem der Ansprüche 1 bis 16,
dadurch gekennzeichnet,
daß der Block A aus einer reinen Komponente a hergestellt wird.

18. Verfahren nach einem der Ansprüche 1 bis 16,
dadurch gekennzeichnet,
daß Block A aus mindestens 2 verschiedenen Monomeren a und a' hergestellt wird.

19. Verfahren nach Anspruch 18,
dadurch gekennzeichnet,
daß das Monomer a in einer höheren Konzentration eingesetzt wird als das Monomer a'.

20. Verfahren nach einem der Ansprüche 1 bis 19,
dadurch gekennzeichnet,
daß Block B aus einem reinen Monomer b hergestellt wird.

21. Verfahren nach einem der Ansprüche 1 bis 19,
dadurch gekennzeichnet,
daß Block B aus mindestens zwei Komponenten b und b' hergestellt wird.

22. Verfahren nach Anspruch 21,
dadurch gekennzeichnet,
daß das Monomer b in einer höheren Konzentration eingesetzt wird, als das Monomer b'.

23. Verfahren nach einem der Ansprüche 1 bis 22,
dadurch gekennzeichnet,
daß ein Block A der Kettenlänge von 10 bis 2000 Monomereinheiten a hergestellt wird.

24. Verfahren nach Anspruch 23,
dadurch gekennzeichnet,
daß ein Block A der Kettenlänge von 20 bis 500 Monomereinheiten a hergestellt wird.

25. Verfahren nach einem der Ansprüche 1 bis 24,
dadurch gekennzeichnet,
daß ein Block B einer Kettenlänge von 10 bis 2000 Monomereinheiten b hergestellt wird.

26. Verfahren nach Anspruch 25,
dadurch gekennzeichnet,
daß ein Block B einer Kettenlänge von 20 bis 500 Monomereinheiten b hergestellt wird.

27. Verfahren nach einem der Ansprüche 1 bis 26,
dadurch gekennzeichnet,
daß AB-Blockcopolymere mit einer niedrigen Glasübergangstemperatur des Blockes A hergestellt werden.

28. AB-Blockcopolymer,
dadurch gekennzeichnet,
daß es nach einem der Ansprüche 1 bis 27 hergestellt wurde.

29. Mycellare Struktur,
dadurch gekennzeichnet,
daß sie aus einem AB-Blockcopolymer nach Anspruch 28 besteht.

30. Mycellare Struktur nach Anspruch 29,
dadurch gekennzeichnet,
daß sie in einem Lösungsmittel enthalten ist, das einen der Blöcke A oder B nicht löst.

31. Mycellare Struktur nach Anspruch 29 oder 30,
dadurch gekennzeichnet,
daß sie aus einem Gemisch von AB-Blockcopolymeren nach Anspruch 28 besteht.

## Claims

1. Process for the preparation of hydrophobichydrophilic AB block copolymers by anionic polymerization,
characterized in that
the monomer units a of the block A are a conjugated diene, and the monomer units b of the block B are an epoxide, in which the block A is prepared in a first reaction step in a nonpolar solvent, and the block B is prepared in a second reaction step in a polar solvent, where, at the end of the first reaction step,
1. the epoxide and
2. a proton donor is added, and the polymerization of the block B is carried out using an alkali metal initiator, with the exception of a lithium initiator.

2. Process according to Claim 1,
characterized in that
the polymerization of the block A is carried out using a lithium organyl as initiator.

3. Process according to either of Claims 1 or 2,
characterized in that
the alkali metal initiator used for the polymerization of the block B is an initiator from the group consisting of alkali metal organyl, alkali metal hydride and alkali metal.

4. Process according to Claim 3,
characterized in that
the lithium initiator in the first reaction step is a bifunctional initiator.

5. Process according to one of Claims 1 to 4,
characterized in that
the double bonds which appear in the block A are at least partially hydrogenated.

6. Process according to Claim 5,
characterized in that
the double bonds are completely hydrogenated.

7. Process according to Claim 5 or 6,
characterized in that
the double bonds which appear in the block A are hydrogenated following the addition of acid.

8. Process according to one of Claims 1 to 7,
characterized in that
the block A, following the addition of the proton donor or following the hydrogenation, is dissolved at least once in a solvent, and the solvent is distilled off.

9. Process according to Claim 8,
characterized in that
the solvent is benzene.

10. Process according to Claim 8 or 9,
characterized in that
the distillation is carried out under reduced pressure.

11. Process according to one of Claims 8 or 10,
characterized in that
following distillation at a temperature between room temperature and 120°C, evacuation is carried out.

12. Process according to one of Claims 8 to 11,
characterized in that
the distillation is carried out at room temperature.

13. Process according to one of Claims 1 to 7,
characterized in that
the block A, following the addition of the proton donor or following hydrogenation, is separated off, and evacuation is carried out.

14. Process according to Claim 13,
characterized in that
evacuation is carried out at a temperature between room temperature and 120°C.

15. Process according to one of Claims 1 to 14,
characterized in that
the preparation of the block A is carried out at a temperature which does not fall below room temperature.

16. Process according to one of Claims 1 to 15,
characterized in that
the preparation of the block B is carried out at a temperature between room temperature and 50°C.

17. Process according to one of Claims 1 to 16,
characterized in that
the block A is prepared from a pure component a.

18. Process according to one of Claims 1 to 16,
characterized in that
block A is prepared from at least 2 different monomers a and a'.

19. Process according to Claim 18,
characterized in that
monomer a is used in a higher concentration than monomer a'.

20. Process according to one of Claims 1 to 19,
characterized in that
block B is prepared from a pure monomer b.

21. Process according to one of Claims 1 to 19,
characterized in that
block B is prepared from at least two components b and b'.

22. Process according to Claim 21,
characterized in that
monomer b is used in a higher concentration than monomer b'.

23. Process according to one of Claims 1 to 22,
characterized in that
a block A of chain length from 10 to 2000 monomer units a is prepared.

24. Process according to Claim 23,
characterized in that
a block A of chain length from 20 to 500 monomer units a is prepared.

25. Process according to one of Claims 1 to 24,
characterized in that
a block B of chain length from 10 to 2000 monomer units b is prepared.

26. Process according to Claim 25,
characterized in that
a block B of chain length from 30 to 500 monomer units b is prepared.

27. Process according to one of Claims 1 to 26,
characterized in that
AB block copolymers having a low glass transition temperature of the block A are prepared.

28. AB block copolymer,
characterized in that
it has been prepared according to one of Claims 1 to 27.

29. Micellar structure,
characterized in that
it consists of an AB block copolymer according to Claim 28.

30. Micellar structure according to Claim 29,
characterized in that
it is present in a solvent which does not dissolve one of the blocks A or B.

31. Micellar structure according to Claim 29 or 30,
characterized in that
it consists of a mixture of AB block copolymers according to Claim 28.

## Revendications

1. Procédé de préparation de copolymères séquencés AB hydrophobes - hydrophiles par polymérisation anionique,
caractérisé
en ce que les motifs a monomères de la séquence A sont un diène conjugué et les motifs b monomères de la séquence B sont un époxyde, la séquence A étant préparée dans un premier stade de réaction dans un solvant non polaire et la séquence B étant préparée dans un second stade de réaction dans un solvant polaire, avec addition pour mettre fin au premier stade de réaction
1. de l'époxyde, et
2. d'un donneur de protons et la polymérisation de la séquence B s'effectue au moyen d'un initiateur à base de métal alcalin à l'exception d'un initiateur au lithium.

2. Procédé suivant la revendication 1,
caractérisé
en ce qu'il consiste à effectuer la polymérisation de la séquence A au moyen d'un organolithien comme initiateur.

3. Procédé suivant l'une des revendications 1 ou 2,
caractérisé
en ce qu'il consiste à utiliser, comme initiateur à base de métal alcalin pour la polymérisation de la séquence B, un initiateur choisi dans le groupe des composés organiques de métal alcalin, des hydrures de métal alcalin et des métaux alcalins.

4. Procédé suivant la revendication 3,
caractérisé
en ce que l'initiateur au lithium dans le premier stade de réaction est un initiateur bifonctionnel.

5. Procédé suivant l'une des revendications 1 à 4,
caractérisé
en ce que les doubles liaisons se produisant dans la séquence A sont hydrogénées au moins partiellement.

6. Procédé suivant la revendication 5,
caractérisé
en ce que les doubles liaisons sont hydrogénées entièrement.

7. Procédé suivant les revendications 5 ou 6,
caractérisé
en ce que les doubles liaisons se produisant dans la séquence A sont hydrogénées à la suite de l'addition d'acide.

8. Procédé suivant l'une des revendications 1 à 7,
caractérisé
en ce que la séquence A après l'addition du donneur de protons ou après l'hydrogénation est dissoute au moins une fois dans un solvant et le solvant est séparé par distillation.

9. Procédé suivant la revendication 8,
caractérisé
en ce que le solvant est le benzène.

10. Procédé suivant la revendication 8 ou 9,
caractérisé
en ce que la distillation est effectuée sous vide.

11. Procédé suivant l'une des revendications 8 à 10,
caractérisé
en ce qu'il consiste après la distillation à mettre sous vide à une température comprise entre la température ambiante et 120°C.

12. Procédé suivant l'une des revendications 8 à 11,
caractérisé
en ce que la distillation est effectuée à température ambiante.

13. Procédé suivant l'une des revendications 1 à 7,
caractérisé
en ce qu'il consiste à séparer la séquence A après l'addition du donneur de protons ou après l'hydrogénation et à la mettre sous vide.

14. Procédé suivant la revendication 13,
caractérisé
en ce qu'il consiste à mettre sous vide à une température comprise entre la température ambiante et 120°C.

15. Procédé suivant l'une des revendications 1 à 14,
caractérisé
en ce qu'il consiste à effectuer la préparation de la séquence A à une température qui n'est pas inférieure à la température ambiante.

16. Procédé suivant l'une des revendications 1 à 15,
caractérisé
en ce qu'il consiste à effectuer la préparation de la séquence B à une température comprise entre la température ambiante et 50°C.

17. Procédé suivant l'une des revendications 1 à 16,
caractérisé
en ce qu'il consiste à préparer la séquence A à partir d'un constituant a pure.

18. Procédé suivant l'une des revendications 1 à 16,
caractérisé
en ce qu'il consiste à préparer la séquence A à partir d'au moins deux monomères a et a' différents.

19. Procédé suivant la revendication 18,
caractérisé
en ce qu'il consiste à engager le monomère a en une concentration plus grande que le monomère a'.

20. Procédé suivant l'une des revendications 1 à 19,
caractérisé
en ce qu'il consiste à préparer la séquence B à partir d'un monomère b pure.

21. Procédé suivant l'une des revendications 1 à 19,
caractérisé
en ce qu'il consiste à préparer la séquence B à partir d'au moins deux constituants b et b'.

22. Procédé suivant la revendication 21,
caractérisé
en ce qu'il consiste à engager le monomère b en une concentration plus grande que le monomère b'.

23. Procédé suivant l'une des revendications 1 à 22,
caractérisé
en ce qu'il consiste à préparer une séquence A d'une longueur de chaîne de 10 à 2000 motifs a monomères.

24. Procédé suivant la revendication 23,
caractérisé
en ce qu'il consiste à préparer une séquence A d'une longueur de chaîne de 20 à 500 motifs a monomères.

25. Procédé suivant l'une des revendications 1 à 24,
caractérisé
en ce qu'il consiste à préparer une séquence B d'une longueur de chaîne de 10 à 2000 motifs b monomères.

26. Procédé suivant la revendication 25,
caractérisé
en ce qu'il consiste à préparer une séquence B de longueur de chaîne de 20 à 500 motifs b monomères.

27. Procédé suivant l'une des revendications 1 à 26,
caractérisé
en ce qu'il consiste à préparer des copolymères séquencés AB ayant une température de transition à l'état vitreux de la séquence A qui est basse.

28. Copolymère séquencé AB,
caractérisé
en ce qu'il a été préparé suivant l'une des revendications 1 à 27.

29. Structure micellaire,
caractérisée
en ce qu'elle est constituée d'un copolymère séquencé AB suivant la revendication 28.

30. Structure micellaire suivant la revendication 29,
caractérisée
en ce qu'elle est contenue dans un solvant qui ne dissout pas l'une des séquences A ou B.

31. Structure micellaire suivant les revendications 29 ou 30,
caractérisée
en ce qu'elle est constituée d'un mélange de copolymères séquencés AB suivant la revendication 28.
